# FASCICULE DE BREVET EUROPEEN

(11) **EP 4 058 327 B1**
(45) Date de publication et mention de la délivrance du brevet: **09.10.2024**
(21) Numéro de dépôt: 20803609.5
(22) Date de dépôt: 13.11.2020
(51) Int. Cl.: B60Q 1/32, F21S 43/30

(54) **MODULE D'ÉCLAIRAGE POUR PARTIE LATÉRALE D'UN VÉHICULE**
BELEUCHTUNGSMODUL FÜR EINEN SEITENABSCHNITT EINES FAHRZEUGES
LIGHTING MODULE FOR A SIDE PORTION OF A VEHICLE

(30) Priorité: 15.11.2019 FR 1912759
(43) Date de publication de la demande: 21.09.2022
(73) Titulaire: Valeo Vision, 93012 Bobigny Cedex (FR)
(72) Inventeur: BEEV, Kostadin, 93012 BOBIGNY Cedex (FR); MEYRENAUD, Jean-Luc, 93012 BOBIGNY Cedex (FR)
(74) Mandataire: Valeo Visibility
(86) Numéro de dépôt international: PCT/EP2020/082071
(87) Numéro de publication internationale: WO 2021/094544

(56) Documents cités:
- WO-A1-2019/150011
- DE-A1- 102018 212 705
- FR-A- 1 039 135
- FR-A- 978 895
- FR-A1- 2 774 743
- JP-U- S5 367 787
- US-A1- 2008 122 597

## Description

L'invention concerne un dispositif optique pour l'éclairage des zones latérales d'un véhicule sans introduire d'effet d'éblouissement pour les piétons et/ou conducteurs des véhicules adjacents. Elle porte aussi sur un module d'éclairage, un dispositif d'assistance et un véhicule en tant que tels comprenant au moins un tel dispositif optique.

Un dispositif optique pour l'éclairage des zones latérales d'un véhicule est connu du document DE 102018212705A.

Avec le développement du véhicule automobile autonome, il devient nécessaire d'améliorer l'assistance à la conduite, dans toutes les conditions d'éclairage, notamment pour gérer différentes fonctions particulières de conduite parmi lesquelles :
- le maintien sur une voie, aussi dénommé par l'appellation anglo-saxonne « lane keeping », pour permettre à un véhicule de suivre sa voie sur une route, notamment en détectant et signalant au conducteur toute déviation de trajectoire ;
- le centrage sur une voie, aussi dénommé par l'appellation anglo-saxonne « lane centering », qui vient en complément de la fonction précédente, et permet plus précisément de maintenir le véhicule de manière autonome au centre de sa voie,
- le changement de voie, aussi dénommé par l'appellation anglo-saxonne « lane changing », pour permettre à un véhicule de changer de voie, par exemple en vue d'un dépassement,
- le freinage d'urgence, aussi dénommé par l'appellation anglo-saxonne « automating emergency breaking », ou plus simplement par le sigle AEB,
- la manoeuvre d'évitement d'urgence, aussi dénommé par l'appellation anglo-saxonne « automating emergency steering », ou plus simplement par le sigle AES, qui permet d'éviter un obstacle présent sur sa voie,
- l'assistance au parking, et le parking autonome.

Dans ces différentes fonctions, le dispositif d'assistance a besoin de recevoir des informations en entrée, parmi lesquelles notamment la détection des marquages au sol, comme les lignes délimitant les voies, et/ou la présence des éventuels obstacles sur la route. Cette détection doit pouvoir être réalisée dans toutes les conditions, et notamment la nuit.

En remarque, l'éclairage existant sur un véhicule permet d'éclairer la route devant le véhicule à partir d'une distance de deux mètres sur sa propre voie et de cinq mètres sur les voies adjacentes.

Cependant, l'éclairage de la partie latérale du véhicule est plus délicate car l'éclairage doit couvrir l'intégralité d'une surface rectangulaire adjacente au véhicule, s'étendant depuis quelques centimètres du véhicule à plusieurs mètres et s'étendant sur une longueur d'une dizaine de mètres. L'étendue angulaire de cette zone à éclairer rend très difficile l'éclairage de toute cette surface de manière homogène. D'autre part, il est naturellement fortement recommandé de ne pas éblouir les véhicules adjacents.

Ces contraintes font qu'il est aujourd'hui délicat, voire impossible, de pouvoir détecter certains marquages au sol ou obstacles à proximité d'un véhicule, notamment dans les régions latérales, ce qui ne permet pas d'offrir un dispositif d'assistance remplissant les fonctions susmentionnées nécessaires à un véhicule autonome.

Le but de l'invention est de fournir une solution d'éclairage d'une région latérale d'un véhicule remédiant aux inconvénients ci-dessus et améliorant les dispositifs et procédés d'assistance à la conduite d'un véhicule automobile, lui permettant notamment de remplir les fonctions d'assistance explicitées ci-dessus, pour être apte à l'assistance d'un véhicule autonome.

En complément, le but de l'invention est de fournir une solution d'éclairage et d'assistance à la conduite d'un véhicule automobile simple, sans surcoût trop important et fiable.

A cet effet, l'invention porte sur un dispositif optique, tel que défini dans la revendication 1, caractérisé en ce qu'il comprend une surface réfléchissante comprenant une première section par un plan longitudinal vertical de forme sensiblement parabolique et une deuxième section perpendiculaire à la première, par un plan transversal vertical, de forme sensiblement elliptique.

Toutes les sections de la surface réfléchissante par un plan longitudinal vertical peuvent présenter une forme sensiblement parabolique et/ou toutes les sections de la surface réfléchissante par un plan transversal vertical peuvent présenter une forme sensiblement elliptique.

Le dispositif optique peut comprendre une longueur inférieure ou égale à 45 mm, voire inférieure ou égale à 40 mm, voire inférieure ou égale à 35 mm, et/ou peut comprendre une largeur inférieure ou égale à 25 mm, voire inférieure ou égale à 20 mm, et/ou peut comprendre une hauteur inférieure ou égale à 15 mm, voire inférieure ou égale à 10 mm.

Le dispositif optique pour véhicule peut comprendre au moins une source de lumière disposée au niveau d'un foyer de la section de forme sensiblement elliptique de la surface réfléchissante, notamment une source de lumière blanche et/ou proche infrarouge, orientée vers la partie concave de la surface réfléchissante.

Le dispositif optique peut comprendre une inclinaison de l'axe de sa section sensiblement elliptique entre 10 et 30 degrés relativement à un plan horizontal.

La surface réfléchissante peut présenter une butée positionnée au-dessus de l'axe de la section sensiblement elliptique, de sorte à permettre la réflexion d'un éclairage apte à éclairer une zone latérale d'un véhicule sans éblouir un véhicule voisin.

L'invention porte aussi sur un module d'éclairage pour véhicule automobile, caractérisé en ce qu'il comprend au moins un dispositif optique tel que décrit précédemment.

Le module d'éclairage peut comprendre deux dispositifs optiques tels que décrits précédemment, inclinés l'un par rapport à l'autre d'un angle compris entre 30 et 50 degrés mesuré dans la projection sur un plan horizontal.

Le module d'éclairage peut comprendre au moins une caméra, notamment agencée entre deux dispositifs optiques.

L'invention porte aussi sur un dispositif d'assistance à la conduite, caractérisé en ce qu'il comprend au moins un module d'éclairage tel que décrit ci-dessus afin d'éclairer la zone latérale d'un véhicule automobile, en ce qu'il comprend de plus au moins une caméra pour visualiser ladite zone latérale éclairée, et en ce qu'il comprend de plus une unité centrale comprenant un dispositif matériel et/ou logiciel exploitant les données transmises par ladite au moins une caméra pour transmettre des données d'assistance à la conduite à un véhicule.

L'invention porte aussi sur un véhicule automobile, notamment autonome ou semi-autonome, caractérisé en ce qu'il comprend un ou plusieurs dispositifs optiques tels que décrits précédemment ou un ou plusieurs modules d'éclairage tels que décrits précédemment, agencés en partie basse et latérale du véhicule automobile ou au niveau d'un rétroviseur du véhicule ou en ce qu'il comprend un dispositif d'assistance à la conduite tel que décrit ci-dessus.

Enfin, l'invention porte aussi sur un procédé d'assistance à la conduite d'un véhicule automobile, caractérisé en ce qu'il comprend les étapes suivantes
- Eclairage d'une zone latérale d'un véhicule à l'aide d'au moins un dispositif optique tel que décrit précédemment ou d'un ou plusieurs modules d'éclairage tels que décrit précédemment, agencé(s) en partie latérale du véhicule automobile ;
- Visualisation de ladite zone latérale éclairée à l'aide d'au moins une caméra agencée sur le véhicule automobile, et transmission des données visualisées par la caméra vers une unité centrale du véhicule automobile ;
- Analyse desdites données reçues par l'unité centrale, notamment détection d'obstacles, et déduction d'instructions d'assistance à la conduite ;
- Transmission de données d'assistance à la conduite à un dispositif de conduite autonome et/ou à une interface homme machine du véhicule automobile.

Les dessins annexés représentent, à titre d'exemple, un mode de réalisation d'un dispositif optique selon l'invention et d'un véhicule comprenant un tel dispositif.
[Fig. 1] La figure 1 représente schématiquement une vue en perspective de dessus d'un dispositif optique selon un mode de réalisation de l'invention.
[Fig. 2] La figure 2 représente schématiquement une vue en coupe de côté du dispositif optique selon le mode de réalisation de l'invention.
[Fig. 3] La figure 3 représente schématiquement en coupe de côté le fonctionnement du dispositif optique selon le mode de réalisation de l'invention.
[Fig. 4] La figure 4 représente une vue de côté d'un véhicule équipé de dispositifs optiques selon le mode de réalisation de l'invention.
[Fig. 5] La figure 5 représente une vue de côté d'un module d'éclairage comprenant deux dispositifs optiques selon le mode de réalisation de l'invention.

Par convention, nous utiliserons par la suite les trois directions x, y, z pour décrire un dispositif optique seul. La direction y sera appelée direction longitudinale, la direction x la direction transversale, et la direction z la direction verticale. Ces directions sont choisies en relation avec la géométrie particulière du dispositif optique, qui sera décrit ultérieurement. Ces directions sont aussi liées à un véhicule sur lequel le dispositif optique est susceptible d'être positionné, au niveau d'un flanc latéral pour procéder à l'éclairage de la zone latérale dudit véhicule automobile, ce véhicule étant lui-même positionné sur un plan horizontal. Dans un exemple d'implémentation particulier, la direction longitudinale y du dispositif optique correspond à la direction orientée de l'arrière vers l'avant du véhicule automobile. La direction x correspond alors à la direction orientée de la gauche vers la droite du véhicule. La direction z correspond à la direction verticale. Les directions x, y, z sont ainsi aussi définies de manière étendue par rapport à un véhicule automobile, dans une configuration d'alignement particulier du dispositif optique avec le véhicule.

Le dispositif optique 1 selon le mode de réalisation comprend une surface réfléchissante destinée à réfléchir la lumière provenant d'au moins une source de lumière 10, agencée pour émettre de la lumière vers cette surface réfléchissante. Selon le mode de réalisation de l'invention, ce dispositif optique 1 est conçu pour permettre l'éclairage de la zone latérale d'un véhicule automobile, à proximité d'un véhicule automobile, pour respecter la zone d'éclairage ciblée et rappelée précédemment, sans nuisance lumineuse pour les autres véhicules.

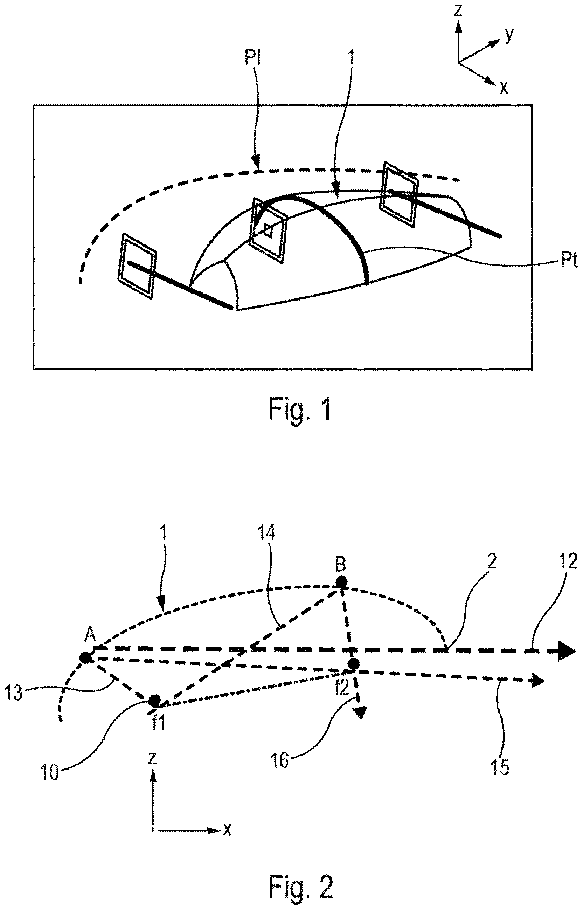

Selon le mode de réalisation, la surface réfléchissante du dispositif optique 1 présente une forme particulière, destinée à une utilisation au sein d'un véhicule automobile selon l'orientation représentée sur la figure 1. Elle présente une section de forme sensiblement parabolique (une portion de parabole) par une coupe par un plan longitudinal-vertical PI yz. La direction longitudinale est destinée à un alignement avec la direction longitudinale (arrière vers avant) d'un véhicule automobile, ou en variante avec une inclinaison avec cette direction longitudinale d'u véhicule. Dans tous les cas, cette forme permet une bonne répartition des rayons lumineux réfléchis selon la direction longitudinale y, et notamment en général une bonne répartition de l'éclairage selon la direction longitudinale y d'un véhicule automobile. Dans le mode de réalisation illustré, toutes les sections de la surface réfléchissante par des plans longitudinaux-verticaux parallèles présentent une forme parabolique. En variante, une partie seulement de ces sections, sur au moins la moitié, voire les deux tiers, de la surface, pourrait présenter une telle forme.

D'autre part, la surface réfléchissante du dispositif optique 1 présente une section de forme sensiblement elliptique (une portion d'ellipse) par une coupe par un plan transversal-vertical Pt xz. Cette forme permet une bonne répartition transversale des rayons lumineux réfléchis. En variante, une partie seulement de ces sections, sur au moins la moitié, voire les deux tiers, de la surface, pourrait présenter une telle forme.

En remarque, les considérations précédentes s'appliquent en considérant que le dispositif optique est destiné à un alignement avec la direction longitudinale y d'un véhicule automobile. Ce même dispositif optique pourra toutefois être incliné par rapport à cette direction longitudinale, comme cela sera détaillé par la suite.

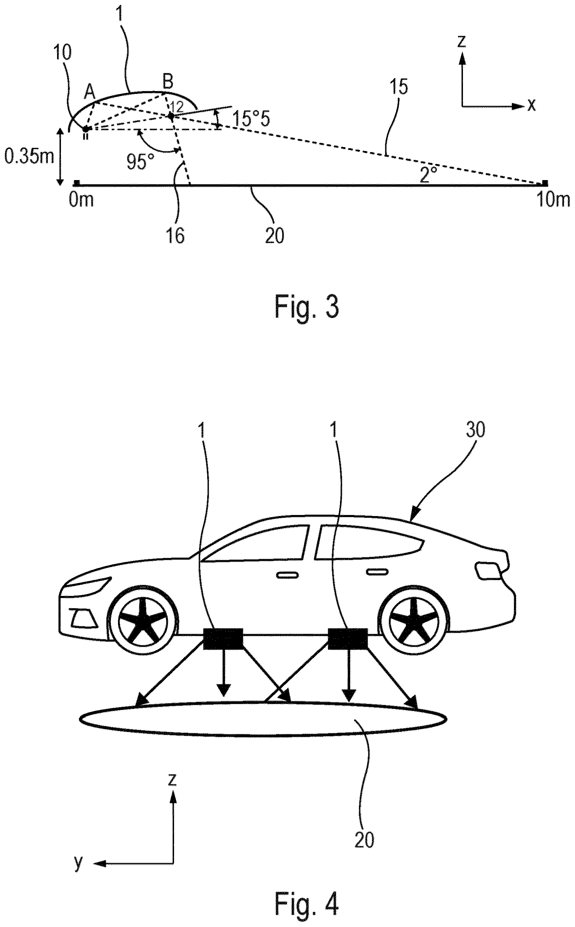

Les figures 2 et 3 illustrent plus précisément le fonctionnement d'un tel dispositif d'éclairage dans un plan transversal-vertical Pt. Dans un tel plan, la surface réfléchissante du dispositif optique 1 comprend donc une forme elliptique de foyers f1 et f2. Sa concavité est sensiblement orientée vers le bas, c'est-à-dire vers le sol, de sorte à réfléchir les rayons lumineux vers le sol, à proximité du véhicule, et selon une portée maximale prédéfinie dans la direction transversale x pour éclairer la zone utile au bon fonctionnement d'un véhicule autonome, comme mentionné précédemment.

D'autre part, le dispositif optique 1 comprend une source de lumière 10 sensiblement positionnée au niveau du foyer f1 de la surface réfléchissante. Cette source de lumière 10 émet une lumière dans un cône de lumière délimité par deux rayons lumineux incidents 13, 14, orientés respectivement vers deux points A, B de la surface réfléchissante. Cette dernière renvoie un cône de lumière vers le sol, délimité respectivement par deux rayons lumineux réfléchis 15, 16, correspondant respectivement aux rayons incidents 13, 14.

La source de lumière 10 peut comprendre une diode électroluminescente. Pour simplifier la description, nous considérerons par la suite la présence d'une seule source de lumière, sachant qu'elle pourrait être en pratique formée par la réunion de plusieurs sources de lumière distinctes. Cette source de lumière peut émettre toute lumière, par exemple une lumière blanche et/ou à infrarouge proche.

La surface réfléchissante comprend de plus une arrête 2, destinée à un positionnement du côté extérieur du véhicule. Cette arrête forme une butée pour les rayons réfléchis : En effet, comme illustré schématiquement sur la figure 2, cette arrête 2 est susceptible de bloquer tout rayon qui serait réfléchi au-dessus du rayon 12 représenté. Elle apporte donc une sécurité au dispositif optique, garantissant qu'aucun rayon lumineux ne sera émis au-delà d'une certaine hauteur qui risquerait d'éblouir des véhicules voisins.

Dans un mode de réalisation non représenté, on pourrait prolonger la surface du réflecteur depuis l'arrête 2 jusqu'à l'intersection avec le rayon 15 de façon à masquer latéralement la surface éclairée. Cela permettrait de réduire au maximum l'éblouissement latérale tout en maintenant un éclairage au sol performant.

La figure 3 représente plus précisément le fonctionnement du dispositif optique selon le mode de réalisation dans un exemple particulier d'implémentation. Dans cet exemple, la surface réfléchissante est orientée de manière inclinée par rapport à un plan horizontal, de sorte que l'axe f1-f2 de sa section elliptique soit inclinée d'un angle d'environ 15 degrés par rapport à un tel plan horizontal, ouverte vers le côté latéral à éclairer. De plus, la distance entre les deux foyers de l'ellipse est d'environ 25 mm. En complément, le dispositif optique présente une longueur d'environ 40 mm, mesurée selon la direction longitudinale y, et une hauteur d'environ 10 mm, mesurée dans la direction verticale z. Le dispositif optique présente ainsi une petite dimension qui permet avantageusement son positionnement facile et de manière flexible au niveau d'un véhicule automobile. D'autre part, le dispositif optique est positionné sur un bas de caisse d'un véhicule automobile, à une hauteur d'environ 35 cm par rapport au sol. Avec de tels paramètres, il apparaît que la surface réfléchissante du dispositif optique émet un premier rayon lumineux 16 sensiblement vertical, présentant une inclinaison de 95 degrés relativement à la direction verticale. De plus, il émet un deuxième rayon lumineux 15 qui atteint le sol à une distance d'environ 10 m du véhicule (dans la direction transversale x du dispositif optique, qui peut coïncider ou non avec la direction transversale du véhicule, selon l'agencement choisi pour le dispositif optique au sein du véhicule automobile). Le dispositif optique 1 selon le mode de réalisation permet ainsi d'atteindre un éclairage latéral satisfaisant pour un véhicule automobile.

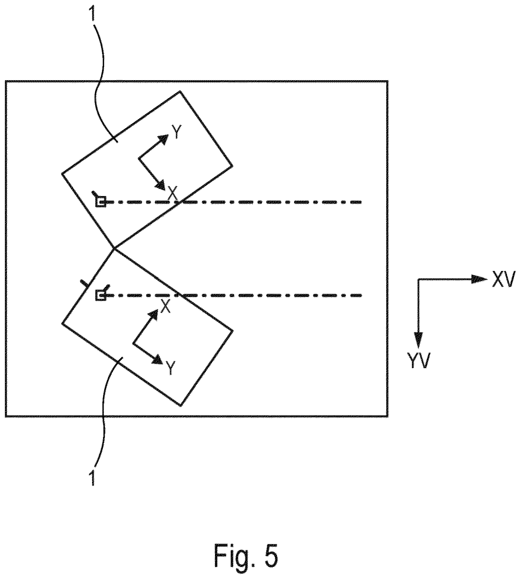

La figure 4 illustre ainsi un véhicule automobile intégrant deux modules d'éclairage agencés en partie inférieure de sa caisse, sur son côté. Chaque module d'éclairage comprend un dispositif optique 1 selon le mode de réalisation de l'invention. Un tel dispositif optique 1 peut être positionné de sorte que sa direction longitudinale coïncide avec la direction longitudinale du véhicule automobile. En variante, chaque module d'éclairage pourrait comprendre plusieurs dispositifs optiques, comme cela sera par exemple décrit ci-dessous en référence à la figure 5. Naturellement, de tels modules d'éclairage sont prévus sur les deux côtés du véhicule. De plus, ces modules d'éclairage sont agencés de manière répartie sur la longueur du véhicule automobile. Ils sont par exemple sensiblement positionnés respectivement au tiers et aux deux tiers de la longueur du véhicule automobile. Ils sont positionnés entre les deux roues du véhicule. Par cet agencement, les modules d'éclairage permettent de former une zone latérale éclairée 20 telle que recherchée, c'est-à-dire suffisante pour un éclairage satisfaisant de la zone latérale d'un véhicule automobile, compatible avec une conduite autonome d'un tel véhicule. Ces modules d'éclairage sont donc conçus pour coopérer avec au moins une caméra agencée sur un véhicule automobile, permettant de visualiser ladite zone latérale éclairée 20.

Naturellement, en variante, les modules d'éclairage selon l'invention pourraient être disposés différemment sur le côté d'un véhicule automobile. Ils pourraient être agencés à tout niveau de la caisse du véhicule, ou sur un rétroviseur. L'inclinaison et les paramètres géométriques du ou des dispositifs optiques des modules d'éclairage seront adaptés pour atteindre un résultat similaire à celui représenté par la figure 3.

Comme mentionné précédemment, un module d'éclairage selon l'invention peut intégrer plusieurs dispositifs optiques tels que décrits précédemment. Ainsi, la figure 5 illustre à titre d'exemple un module d'éclairage comprenant deux dispositifs optiques 1 identiques, dont les directions longitunales y telles que représentées sont orientées d'un angle de 40 degrés. Chaque dispositif optique présente une direction longitudinale y orientée de 20 degrés par rapport à la direction transversale xv d'un véhicule. Les deux dispositifs optiques sont symétriquement répartis par rapport à cette direction transversale xv du véhicule. Ces orientations sont mesurées dans un plan horizontal. Cet agencement permet une bonne complémentarité des deux dispositifs optiques, dont l'éclairage complémentaire permet d'atteindre un éclairage homogène et d'amplitude souhaitée. En variante, les deux dispositifs optiques pourraient être inclinés l'un par rapport à l'autre d'un angle compris entre 30 et 50 degrés dans un plan horizontal. Il ressort ainsi que le dispositif optique 1 peut donc ne pas être aligné avec la direction longitudinale yv (du véhicule automobile), de sorte que l'axe f1-f2 de sa section elliptique, projetée dans un plan horizontal, peut être incliné par rapport à la direction transversale xv du véhicule.

D'autre part, selon un mode de réalisation avantageux, une caméra peut être intégrée dans un module d'éclairage selon l'invention. Par exemple, une caméra peut être positionnée entre deux dispositifs optiques 1 d'un module d'éclairage.

Le dispositif optique peut être fabriqué en tout matériau. Il peut notamment comprendre tout matériau permettant de former une surface réfléchissante. Par exemple, il peut se présenter dans un matériau plastique dont la surface réfléchissante est métallisée.

Naturellement, l'invention ne se limite pas au mode de réalisation décrit. Notamment, la surface réfléchissante peut présenter différentes variantes. Elle comprend au moins une première section présentant une forme en arc de parabole ou sensiblement en arc de parabole. Elle peut comprendre deux parties réparties autour d'un plan longitudinal vertical Pl comprenant chacune des sections paraboliques dont les paraboles ne sont pas nécessairement identiques. Elle comprend de plus au moins une deuxième section perpendiculaire à la première section, présentant une forme en arc d'ellipse ou sensiblement en arc d'ellipse. Elle comprend avantageusement une longueur inférieure ou égale à 45 mm, voire inférieure ou égale à 40 mm, voire inférieure ou égale à 35 mm. Elle comprend avantageusement une largeur inférieure ou égale à 25 mm, voire inférieure ou égale à 20 mm. Elle comprend avantageusement une hauteur inférieure ou égale à 15 mm, voire inférieure ou égale à 10 mm. La surface réfléchissante comprend de plus une inclinaison par rapport à un plan horizontal de sorte de l'axe de sa section sensiblement elliptique présente une inclinaison entre 10 et 30 degrés relativement à un plan horizontal.

L'invention porte aussi sur un module d'éclairage destiné à être monté sur le bas de caisse d'un véhicule, notamment d'un véhicule automobile, comprenant plusieurs dispositifs optique 1 tels que décrits précédemment.

L'invention porte aussi sur un dispositif d'assistance à la conduite, comprenant au moins un module d'éclairage comprenant au moins un tel dispositif optique, afin d'éclairer la zone latérale d'un véhicule automobile. Ce dispositif d'assistance comprend de plus au moins une caméra pour visualiser ladite zone latérale éclairée. Il comprend de plus une unité centrale, qui peut être un calculateur comprenant un dispositif matériel et/ou logiciel permettant d'exploiter les données transmises par ladite au moins une caméra, afin d'analyser lesdites données pour transmettre des données d'assistance à la conduite à un véhicule. Ce dispositif d'assistance remplit ainsi les fonctions de « lane keeping », et/ou de « lane centering », et/ou de « lane changing », et/ou de « automating emergency breaking », et/ou de « automating emergency steering », et/ou d'assistance au parking, et/ou de parking autonome, comme rappelé au début de la description.

L'invention porte aussi sur un procédé d'assistance à la conduite d'un véhicule automobile, comprenant les étapes suivantes :
- éclairage d'une zone latérale d'un véhicule à l'aide d'au moins un dispositif optique ou d'un module d'éclairage tel que décrit précédemment ;
- visualisation de ladite zone latérale éclairée à l'aide d'au moins une caméra, et transmission des données visualisées de la caméra vers une unité centrale ;
- analyse des données reçues de la caméra par l'unité centrale, notamment détection d'obstacles, et déduction d'instructions d'assistance à la conduite ;
- transmission de données d'assistance à la conduite à un dispositif de conduite autonome et/ou à une interface homme machine du véhicule.

L'invention porte enfin sur un véhicule automobile, de préférence autonome, comprenant un ou plusieurs dispositifs optiques ou modules d'éclairage ou un dispositif d'assistance tels que décrits précédemment et agencés en partie latérale du véhicule automobile.

## Revendications

1. Dispositif optique (1) pour l'éclairage des zones latérales d'un véhicule, ayant une direction longitudinale coïncidant avec la direction longitudinale, arrière vers avant du véhicule automobile, comprenant une surface réfléchissante avec une première section par un plan longitudinal vertical de forme sensiblement parabolique et une deuxième section perpendiculaire à la première, par un plan transversal vertical, de forme sensiblement elliptique, au moins une partie des sections de la surface réfléchissante par un plan longitudinal vertical présentant une forme sensiblement parabolique et/ou au moins une partie des sections de la surface réfléchissante par un plan transversal vertical présentant une forme sensiblement elliptique , **caractérisé en ce qu'**il comprend au moins une source de lumière (10) disposée au niveau d'un foyer d'une desdites section de forme sensiblement elliptique de la surface réfléchissante.

2. Dispositif optique (1) pour véhicule selon la revendication précédente, **caractérisé en ce que** soit la moitié des sections, soit les deux tiers des sections, soit toutes les sections de la surface réfléchissante par un plan longitudinal vertical présentent une forme sensiblement parabolique et/ou soit la moitié des sections, soit les deux tiers des sections, soit toutes les sections de la surface réfléchissante par un plan transversal vertical présentent une forme sensiblement elliptique.

3. Dispositif optique (1) pour véhicule selon l'une des revendications précédentes, **caractérisé en ce que** le dispositif optique comprend une longueur inférieure ou égale à 45 mm, voire inférieure ou égale à 40 mm, voire inférieure ou égale à 35 mm, et/ou **en ce qu'**il comprend une largeur inférieure ou égale à 25 mm, voire inférieure ou égale à 20 mm, et/ou **en ce qu'**il comprend une hauteur inférieure ou égale à 15 mm, voire inférieure ou égale à 10 mm.

4. Dispositif optique (1) pour véhicule selon l'une des revendications précédentes, caractérisé en ce la source de lumière est une source de lumière blanche et/ou proche infrarouge.

5. Dispositif optique (1) pour véhicule selon la revendication précédente, **caractérisé en ce qu'**il comprend une inclinaison de l'axe de sa section sensiblement elliptique entre 10 et 30 degrés relativement à un plan horizontal.

6. Dispositif optique (1) pour véhicule selon la revendication précédente, **caractérisé en ce que** la surface réfléchissante présente une butée (2) positionnée au-dessus de l'axe de la section sensiblement elliptique, de sorte à permettre la réflexion d'un éclairage apte à éclairer une zone latérale d'un véhicule sans éblouir un véhicule voisin.

7. Module d'éclairage pour véhicule automobile, **caractérisé en ce qu'**il comprend au moins un dispositif optique (1) selon l'une des revendications précédentes.

8. Module d'éclairage selon la revendication précédente, **caractérisé en ce qu'**il comprend deux dispositifs optiques (1) selon l'une des revendications 1 à 6, inclinés l'un par rapport à l'autre d'un angle compris entre 30 et 50 degrés mesuré dans la projection sur un plan horizontal.

9. Module d'éclairage selon l'une des revendications 7 ou 8, **caractérisé en ce qu'**il comprend au moins une caméra, notamment agencée entre deux dispositifs optiques.

10. Dispositif d'assistance à la conduite, **caractérisé en ce qu'**il comprend au moins un module d'éclairage selon l'une des revendications 7 ou 8 afin d'éclairer la zone latérale d'un véhicule automobile, **en ce qu'**il comprend de plus au moins une caméra pour visualiser ladite zone latérale éclairée, et **en ce qu'**il comprend de plus une unité centrale comprenant un dispositif matériel et/ou logiciel exploitant les données transmises par ladite au moins une caméra pour transmettre des données d'assistance à la conduite à un véhicule.

11. Véhicule automobile, notamment autonome ou semi-autonome, **caractérisé en ce qu'**il comprend un ou plusieurs dispositifs optiques (1) selon l'une des revendications 1 à 6 ou un ou plusieurs modules d'éclairage selon l'une des revendications 7 à 9, agencés en partie basse et latérale du véhicule automobile ou au niveau d'un rétroviseur du véhicule ou **en ce qu'**il comprend un dispositif d'assistance à la conduite selon la revendication précédente.

12. Procédé d'assistance à la conduite d'un véhicule automobile, **caractérisé en ce qu'**il comprend les étapes suivantes :
- Eclairage d'une zone latérale d'un véhicule à l'aide d'au moins un dispositif optique (1) selon l'une des revendications 1 à 6 ou d'un ou plusieurs modules d'éclairage selon l'une des revendications 7 à 9, agencé(s) en partie latérale du véhicule automobile ;
- Visualisation de ladite zone latérale éclairée à l'aide d'au moins une caméra agencée sur le véhicule automobile, et transmission des données visualisées par la caméra vers une unité centrale du véhicule automobile ;
- Analyse desdites données reçues par l'unité centrale, notamment détection d'obstacles, et déduction d'instructions d'assistance à la conduite ;
- Transmission de données d'assistance à la conduite à un dispositif de conduite autonome et/ou à une interface homme machine du véhicule automobile.

## Patentansprüche

1. Optische Vorrichtung (1) zur Beleuchtung der seitlichen Bereiche eines Fahrzeugs, die eine Längsrichtung hat, die mit der Längsrichtung, von hinten nach vorn, des Kraftfahrzeugs zusammenfällt, umfassend eine reflektierende Oberfläche mit einem ersten Querschnitt durch eine vertikale Längsebene mit im Wesentlichen parabolischer Form und einen zweiten Querschnitt, der senkrecht zu dem ersten ist, durch eine vertikale Querebene mit im Wesentlichen elliptischer Form, wobei mindestens ein Teil der Querschnitte der reflektierenden Oberfläche durch eine vertikale Längsebene eine im Wesentlichen parabolische Form aufweist und/oder wobei mindestens ein Teil der Querschnitte der reflektierenden Oberfläche durch eine vertikale Querebene eine im Wesentlichen elliptische Form aufweist, **dadurch gekennzeichnet, dass** sie mindestens eine Lichtquelle (10) umfasst, die an einem Brennpunkt eines der Querschnitte mit im Wesentlichen elliptischer Form der reflektierenden Oberfläche angeordnet ist.

2. Optische Vorrichtung (1) für ein Fahrzeug nach dem vorhergehenden Anspruch, **dadurch gekennzeichnet, dass** entweder die Hälfte der Querschnitte oder zwei Drittel der Querschnitte oder alle Querschnitte der reflektierenden Oberfläche durch eine vertikale Längsebene eine im Wesentlichen parabolische Form aufweisen und/oder entweder die Hälfte der Querschnitte oder zwei Drittel der Querschnitte oder alle Querschnitte der reflektierenden Oberfläche durch eine vertikale Querebene eine im Wesentlichen elliptische Form aufweisen.

3. Optische Vorrichtung (1) für ein Fahrzeug nach einem der vorhergehenden Ansprüche, **dadurch gekennzeichnet, dass** die optische Vorrichtung eine Länge kleiner oder gleich 45 mm oder sogar kleiner oder gleich 40 mm oder sogar kleiner oder gleich 35 mm umfasst, und/oder dadurch, dass sie eine Breite kleiner oder gleich 25 mm oder sogar kleiner oder gleich 20 mm umfasst, und/oder dadurch, dass sie eine Höhe kleiner oder gleich 15 mm oder sogar kleiner oder gleich 10 mm umfasst.

4. Optische Vorrichtung (1) für ein Fahrzeug nach einem der vorhergehenden Ansprüche, **dadurch gekennzeichnet, dass** die Lichtquelle eine weiße und/oder Nahinfrarot-Lichtquelle ist.

5. Optische Vorrichtung (1) für ein Fahrzeug nach dem vorhergehenden Anspruch, **dadurch gekennzeichnet, dass** sie eine Neigung der Achse ihres im Wesentlichen elliptischen Querschnitts zwischen 10 und 30 Grad relativ zu einer horizontalen Ebene umfasst.

6. Optische Vorrichtung (1) für ein Fahrzeug nach dem vorhergehenden Anspruch, **dadurch gekennzeichnet, dass** die reflektierende Oberfläche einen Anschlag (2) aufweist, der oberhalb der Achse des im Wesentlichen elliptischen Querschnitts positioniert ist, so dass die Reflexion einer Beleuchtung ermöglicht wird, die geeignet ist, einen seitlichen Bereich eines Fahrzeugs zu beleuchten, ohne ein benachbartes Fahrzeug zu blenden.

7. Beleuchtungsmodul für ein Kraftfahrzeug, **dadurch gekennzeichnet, dass** es mindestens eine optische Vorrichtung (1) nach einem der vorhergehenden Ansprüche umfasst.

8. Beleuchtungsmodul nach dem vorhergehenden Anspruch, **dadurch gekennzeichnet, dass** es zwei optische Vorrichtungen (1) nach einem der Ansprüche 1 bis 6 umfasst, die zueinander um einen Winkel zwischen 30 und 50 Grad, gemessen in der Projektion auf eine horizontale Ebene, geneigt sind.

9. Beleuchtungsmodul nach einem der Ansprüche 7 oder 8, **dadurch gekennzeichnet, dass** es mindestens eine Kamera umfasst, die insbesondere zwischen zwei optischen Vorrichtungen angeordnet ist.

10. Fahrassistenzvorrichtung, **dadurch gekennzeichnet, dass** sie mindestens ein Beleuchtungsmodul nach einem der Ansprüche 7 oder 8 umfasst, um den seitlichen Bereich eines Kraftfahrzeugs zu beleuchten, dass sie zusätzlich mindestens eine Kamera umfasst, um den beleuchteten seitlichen Bereich zu visualisieren, und dass sie zusätzlich eine Zentraleinheit umfasst, die eine Hardware- und/oder Softwarevorrichtung umfasst, welche die von der mindestens einen Kamera übertragenen Daten auswertet, um Fahrassistenzdaten an ein Fahrzeug zu übertragen.

11. Kraftfahrzeug, insbesondere autonomes oder halbautonomes, **dadurch gekennzeichnet, dass** es eine oder mehrere optische Vorrichtungen (1) nach einem der Ansprüche 1 bis 6 oder ein oder mehrere Beleuchtungsmodule nach einem der Ansprüche 7 bis 9 umfasst, die im unteren und seitlichen Teil des Kraftfahrzeugs oder an einem Rückspiegel des Fahrzeugs angeordnet sind, oder dass es eine Fahrassistenzvorrichtung nach dem vorhergehenden Anspruch umfasst.

12. Fahrassistenzverfahren für ein Kraftfahrzeug, **dadurch gekennzeichnet, dass** es die folgenden Schritte umfasst:
- Beleuchten eines seitlichen Bereichs eines Fahrzeugs mithilfe mindestens einer optischen Vorrichtung (1) nach einem der Ansprüche 1 bis 6 oder eines oder mehrerer Beleuchtungsmodule nach einem der Ansprüche 7 bis 9, das (die) im seitlichen Teil des Kraftfahrzeugs angeordnet ist(sind);
- Visualisieren des beleuchteten seitlichen Bereichs mithilfe mindestens einer an dem Kraftfahrzeug angeordneten Kamera und Übertragen der von der Kamera visualisierten Daten zu einer Zentraleinheit des Kraftfahrzeugs;
- Analysieren der empfangenen Daten durch die Zentraleinheit, insbesondere Erkennen von Hindernissen, und Ableiten von Fahrassistenzanweisungen;
- Übertragen von Fahrassistenzdaten zu einer Vorrichtung zum autonomen Fahren und/oder zu einer Mensch-Maschine-Schnittstelle des Kraftfahrzeugs.

## Claims

1. An optical device (1) for lighting the lateral regions of a vehicle, having a longitudinal direction coinciding with the longitudinal direction, from rear to front, of the motor vehicle, and comprising a reflecting surface with a first section on a vertical longitudinal plane of substantially parabolic shape and a second section, perpendicular to the first, on a vertical transverse plane, of substantially elliptical shape, at least a part of the sections of the reflecting surface on a vertical longitudinal plane having a substantially parabolic shape and/or at least a part of the sections of the reflecting surface on a vertical transverse plane having a substantially elliptical shape, **characterized in that** it comprises at least one light source (10) arranged at the level of a focal point of one of said sections of substantially elliptical shape of the reflecting surface.

2. Optical device (1) for a vehicle according to the preceding claim, **characterized in that** half of the sections, or two thirds of the sections, or all the sections of the reflecting surface on a vertical longitudinal plane have a substantially parabolic shape and/or half of the sections, or two thirds of the sections, or all the sections of the reflecting surface on a vertical transverse plane have a substantially elliptical shape.

3. Optical device (1) for a vehicle according to either of the preceding claims, **characterized in that** the optical device comprises a length less than or equal to 45 mm, or even less than or equal to 40 mm, even less than or equal to 35 mm, and/or **in that** it comprises a width less than or equal to 25 mm, or even less than or equal to 20 mm, and/or **in that** it comprises a height less than or equal to 15 mm, even less than or equal to 10 mm.

4. Optical device (1) for a vehicle according to one of the preceding claims, **characterized in that** the light source is a source of white and/or near infrared light.

5. Optical device (1) for a vehicle according to the preceding claim, **characterized in that** it comprises an inclination of the axis of its substantially elliptical section of between 10 and 30 degrees relative to a horizontal plane.

6. Optical device (1) for a vehicle according to the preceding claim, **characterized in that** the reflecting surface has an end stop (2) positioned above the axis of the substantially elliptical section, so as to allow the reflection of lighting suitable for illuminating a lateral region of a vehicle without dazzling a neighbouring vehicle.

7. Luminous module for a motor vehicle, **characterized in that** it comprises at least one optical device (1) according to one of the preceding claims.

8. Luminous module according to the preceding claim, **characterized in that** it comprises two optical devices (1) according to one of Claims 1 to 6, inclined with respect to each other by an angle of between 30 and 50 degrees measured in projection on a horizontal plane.

9. Luminous module according to either of Claims 7 and 8, **characterized in that** it comprises at least one camera, in particular arranged between two optical devices.

10. Driving assistance device, **characterized in that** it comprises at least one luminous module according to either of Claims 7 and 8 in order to illuminate the lateral region of a motor vehicle, **in that** it comprises moreover at least one camera for viewing said illuminated lateral region, and **in that** it further comprises a central unit comprising a hardware and/or software device exploiting the data transmitted by said at least one camera to transmit driving assistance data to a vehicle.

11. Motor vehicle, in particular an autonomous or semi-autonomous vehicle, **characterized in that** it comprises one or more optical devices (1) according to one of Claims 1 to 6 or one or more luminous modules according to one of Claims 7 to 9, arranged in the lower and lateral part of the motor vehicle or at the level of a rear-view mirror of the vehicle or **in that** it comprises a driving assistance device according to the preceding claim.

12. Method for assisting with the driving of a motor vehicle, **characterized in that** it comprises the following steps:
- Lighting of a lateral region of a vehicle using at least one optical device (1) according to one of Claims 1 to 6 or one or more luminous modules according to one of Claims 7 to 9, arranged in the lateral part of the motor vehicle;
- Viewing said illuminated lateral area using at least one camera arranged on the motor vehicle, and transmitting the data viewed by the camera to a central unit of the motor vehicle;
- Analyzing said data received by the central unit, in particular detecting obstacles, and deducing driving assistance instructions;
- Transmitting driving assistance data to an autonomous driving device and/or to a human-machine interface of the motor vehicle.
